# EUROPEAN PATENT SPECIFICATION

(11) **EP 3 118 024 B1**
(45) Date of publication and mention of the grant of the patent: **06.03.2019**
(21) Application number: 15777526.3
(22) Date of filing: 10.04.2015
(51) Int. Cl.: B60C 11/03, B60C 11/00, B60C 11/13, B60C 11/11, B60C 11/12

(54) **TIRE TREAD, AND TIRE**
REIFENLAUFFLÄCHE UND REIFEN
BANDE DE ROULEMENT DE PNEU ET PNEU

(30) Priority: 10.04.2014 WO PCT/JP2014/060423
(43) Date of publication of application: 18.01.2017
(73) Proprietor: Compagnie Générale des Etablissements Michelin, 63000 Clermont-Ferrand (FR)
(72) Inventor: KANEKO Shuichi, Tokyo 163-1073 (JP)
(74) Representative: Regimbeau
(86) International application number: PCT/JP2015/061279
(87) International publication number: WO 2015/156397

(56) References cited:
- WO-A1-2013/088570
- WO-A1-2014/038689
- JP-A- H11 151 912
- JP-A- 2000 158 915

## Description

### Technical Field

The present invention relates to a tyre tread and to a tyre comprising said tread, and more particularly the present invention relates to a tyre tread able to improve performance on snow and performance on ice, and to a tyre.

### Prior Art

Winter tyres, which are also referred to as studless tyres, are well known as tyres that can travel over a winter road surface covered with snow or ice. Winter tyres are generally provided with what are known as sipes, a plurality of narrow incisions opening at a ground contact surface, and improve grip to a winter road surface by virtue of what is known as an edge effect and a water-film removal effect, and also by the use of a compound which is softer than that of tyres which are not for winter use.

The mechanism in winter tyres whereby a frictional force with the road surface is generated is actually different for snow and for ice. A soft compound is therefore used in order to improve performance on ice when the road surface is icy, and it is known that even if a large number of narrow incisions are provided in blocks which are ground contact elements, there is a reduction in the rigidity of the blocks as a result, which hinders an improvement in performance on snow when the road surface is snowy.

Introducing reinforcing parts onto the side walls of the blocks is known to be effective as a means for achieving a good balance between performance on ice and performance on snow in a winter tyre.

For example, Patent Document 1 (see fig. 3) describes a tyre which is adapted to achieve a balance between performance on snow and performance on ice by providing reinforcing parts using rubber having a JIS A hardness of 80 to 95 degrees on block side walls facing a transverse groove and an auxiliary groove, in a block provided with three narrow incisions and one auxiliary groove.

Furthermore, Patent Document 2 (see fig. 2) describes a tyre which is adapted to achieve a balance between performance on snow and performance on ice by employing a composition in which 50 parts or more by weight of carbon black and/or silica are combined with 100 parts by weight of a diene rubber containing 30 wt% or more of a rubber component having a glass transition temperature of -60°C or greater, and providing reinforcing parts employing rubber having a brittleness temperature of -30°C or less on the side walls of the blocks.

Furthermore, Patent Document 3 (see fig. 1) describes a tyre tread which is adapted to achieve a balance between performance on snow and performance on ice by providing reinforcing layers (reinforcing parts) having a material modulus (elastic modulus) of 200 MPa or greater to a thickness of less than 0.5 mm over a region of at least 50% of the block side walls.

Furthermore, as a means for improving performance on snow in particular, Patent Document 4 (see fig. 4) describes a tyre in which performance on snow is improved by providing an undercut portion on a block transverse edge, for example.

Furthermore, Patent Document 5 (see fig. 1) describes a tyre in which sawtooth-shaped unevenness is formed on a block side wall surface.

Furthermore, Patent Document 6 (see fig. 1) describes a tyre tread comprising a plurality of blocks defined by a circumferential main groove and auxiliary grooves, the block comprise a reinforcing part having a mean thickness and provided on at least one of the front surface side walls from among the side walls, and the reinforcing part has a higher elastic modulus Ef than the elastic modulus Et of the rubber composition forming the tread and the blocks.

### Prior Art Documents

### Patent Documents

Patent Document 1: JP 7-047814 A
Patent Document 2: JP 2010-105509 A
Patent Document 3: WO 2013/088570
Patent Document 4: European Patent Application Publication 101348
Patent Document 5: JP 2-041802 U
Patent Document 6: WO 2014/038689

### Summary of the Invention

### Problem to be Solved by the Invention

With the tyres described in Patent Documents 1-5, however, it is difficult to achieve a high-level balance between performance on snow and performance on ice and the performance on snow is inadequate in particular, so there is a need for a tyre which can achieve a higher-level balance between performance on snow and performance on ice from the point of view of safe travel on a winter road surface.

In this regard, the present invention has been devised in order to solve the abovementioned problem in the prior art and the aim thereof lies in providing a tyre tread able to achieve a higher-level balance between performance on snow and performance on ice, and also providing a tyre comprising said tread.

### Means for Solving the Problem

In order to achieve the abovementioned aim, the present invention provides a tyre tread formed by at least one rubber composition and having a ground contact surface contacting a road surface while the tyre is running, wherein the at least one rubber composition has an elastic modulus Et obtained from a tensile test defined in ASTM D882-09; the tread comprises at least one circumferential main groove extending in the tyre circumferential direction, a plurality of auxiliary grooves extending in the tyre rotation axis direction, and a plurality of blocks defined by the circumferential main groove and the auxiliary grooves; each of the plurality of blocks comprises an upper surface forming the ground contact surface of the tread, two front surface side walls extending in the tyre rotation axis direction and facing the auxiliary grooves, and two side surface side walls extending in the tyre circumferential direction and facing the circumferential main groove; the upper surface of the blocks comprises front surface edges formed at a position intersecting the front surface side walls and extending in the tyre rotation axis direction, and side surface edges formed at a position intersecting the side surface side walls and extending in the tyre circumferential direction; the blocks comprise a reinforcing part having a mean thickness t and provided on at least one of the front surface side walls from among the side walls, and the reinforcing part has a higher elastic modulus Ef than the elastic modulus Et of the rubber composition forming the tread and the blocks; and a waveform part having at least two crest parts and at least one trough part is formed on the at least one front surface side wall on which the reinforcing part is formed, and the waveform part is provided in such a way as to form at least part of the front surface side walls and at least part of the reinforcing part on the at least one front surface side wall on which the reinforcing part is provided, the waveform part comprises at least two trough parts, and the innermost part of the waveform part in the tyre radial direction is a trough part, and the ratio (Dmaxi/Dmini) of distances on the blocks in the tyre radial direction is between 1.0 and 1.3, where Dmini is a minimum distance which is either the smallest distance on the waveform part between two crest parts adjacent to each trough part in the tyre radial direction or the smallest distance between the trough part constituting the innermost part of the waveform part in the tyre radial direction and a crest part adjacent to said trough part in the tyre radial direction, and Dmaxi is a maximum distance which is either the greatest distance on the waveform part between two crest parts adjacent to each trough part in the tyre radial direction or the greatest distance between the trough part constituting the innermost part of the waveform part in the tyre radial direction and a crest part adjacent to said trough part in the tyre radial direction.

The present invention also provides a tyre tread formed by at least one rubber composition and having a ground contact surface contacting a road surface while the tyre is running, the at least one rubber composition has an elastic modulus Et obtained from a tensile test defined in ASTM D882-09; the tread comprises at least one circumferential main groove extending in the tyre circumferential direction, a plurality of auxiliary grooves extending in the tyre rotation axis direction, and a plurality of blocks defined by the circumferential main groove and the auxiliary grooves; each of the plurality of blocks comprises an upper surface forming the ground contact surface of the tread, two front surface side walls extending in the tyre rotation axis direction and facing the auxiliary grooves, and two side surface side walls extending in the tyre circumferential direction and facing the circumferential main groove; the upper surface of the blocks comprises front surface edges formed at a position intersecting the front surface side walls and extending in the tyre rotation axis direction, and side surface edges formed at a position intersecting the side surface side walls and extending in the tyre circumferential direction; the blocks comprise a reinforcing part having a mean thickness t and provided on at least one of the front surface side walls from among the side walls, and the reinforcing part has a higher elastic modulus Ef than the elastic modulus Et of the rubber composition forming the tread and the blocks; and a waveform part having at least two crest parts and at least one trough part is formed on the at least one front surface side wall on which the reinforcing part is formed, and the waveform part is provided in such a way as to form at least part of the front surface side walls and at least part of the reinforcing part on the at least one front surface side wall on which the reinforcing part is provided, the blocks further comprise a side wall edge formed at the position of intersection of the at least one front surface side wall on which the reinforcing part is provided and the side surface side walls, and the waveform part is provided with an offset of at least 0.5 mm from the side wall edge and the front surface edges of the at least one front surface side wall.

Here, "groove" refers to a space having a width and a depth which is constructed by connecting two opposing surfaces (wall surfaces, side walls) which do not come into contact with each other under normal usage conditions, by means of another surface (bottom surface).

Furthermore, "main groove" refers to a groove which is mainly responsible for fluid drainage and has a relatively large width among the various types of grooves formed in the tread. In many cases, "main groove" means a groove extending in a linear, zigzag or undulating manner in the tyre circumferential direction, but a groove having a relatively large width which is mainly responsible for fluid drainage and extends at an angle with respect to the tyre rotation direction is also included.

Furthermore, grooves other than the "main groove" are referred to as "auxiliary grooves".

Furthermore, "edge" refers to the intersection between the upper surface of a block and the front surface side wall or side surface side wall (the edges on the upper surface of the block or the boundary on the upper surface of the block with the front surface side wall or side surface side wall). The upper surface of the block which forms part of the ground contact surface is defined by edges such as these. If a bevel is formed between the upper surface and the front surface side wall or side surface side wall, the bevelled part is understood as being part of the upper surface. At the edges defining the upper surface of the block, the intersection between the upper surface of the block and the front surface side wall on the tyre rotation direction side is referred to as the "front surface edge", and the intersection between the upper surface of the block and the side surface side wall on the tyre rotation direction side is referred to as the "side surface edge".

Furthermore, the intersection between the front surface side wall of the block and the side surface side wall (the edges on the side surfaces of the block) is referred to as the "side wall edge". If a bevel is formed between the front surface side wall and the side surface side wall, the edges of the bevelled part are understood as being side wall edges.

Furthermore, "narrow incision" refers to an incision formed as if cut by a knife blade, for example, also referred to as what is known as a "sipe" or the like, the width of the narrow incision on the tread surface mainly being relatively small with respect to the transverse groove (e.g., 2.0 mm or less).

Furthermore, "elastic modulus" refers to the tensile elastic modulus E calculated from a tensile test curve obtained from the tensile test defined in the standard ASTM D882-09. That is to say, the elastic modulus Et of the rubber composition and the elastic modulus Ef of the reinforcing part are calculated from a tensile test curve obtained from the tensile test defined in the standard ASTM D882-09.

According to the present invention having the configuration described above, the waveform part having a shape comprising at least two crest parts and at least one trough part is provided on at least one front surface side wall, so the blocks are readily deformed by means of the trough part of the waveform part when the tyre is travelling on a road surface for which the friction coefficient is at a small enough level such as to be insufficient to cause deformation of the blocks, such as on ice. It is therefore possible to prevent the formation of a water film between the tread and the ice, which is well known as one factor causing a reduction in the friction coefficient on ice, and as a result it is possible to improve the performance on ice.

In addition, according to the present invention, the waveform part provided on at least one front surface side wall is reinforced by means of a reinforcing part, and therefore it is possible to prevent excessive deformation of the blocks produced at the trough part of the waveform part by virtue of the reinforcing effect of the reinforcing part when the tyre is travelling on a road surface for which the friction coefficient is at a sufficiently high level to cause deformation of the blocks, such as on snow, and it is possible to achieve a localized high edge pressure as a result. It is therefore possible for at least one front surface edge to bite effectively into the snow, and the performance on snow can be improved as a result.

According to the present invention, the length Lr of the reinforcing part of the blocks in the tyre radial direction is preferably between 80% and 100% of the height h of the blocks.

According to the present invention having such a configuration, the effect of improving the performance on snow afforded by providing the reinforcing part on at least one front surface side wall can also be effectively demonstrated after the blocks have become worn.

According to the present invention, on the at least one front surface side wall on which the reinforcing part is provided, an angle A, seen from the tyre rotation axis direction between an imaginary line extending along the upper surface of the blocks and passing through the front surface edges, and an imaginary line joining a crest part on the radially outermost side of the waveform part and a trough part adjacent to said crest part in the tyre radial direction, is preferably between 60° and 90°.

According to the present invention having such a configuration, it is possible to prevent buckling deformation of the waveform part that forms part of the reinforcing part, by virtue of the reinforcing effect of the reinforcing part formed on the at least one front surface side wall, when the tyre is travelling on a road surface for which the friction coefficient is at a sufficiently high level to cause deformation of the blocks, such as on snow, and it is possible to achieve a localized high edge pressure as a result. It is therefore possible for the front surface edge to bite effectively into the snow, and the performance on snow can be improved as a result. Furthermore, it is possible to generate a moment force in a direction causing a reduction in ground contact pressure in a region close to the front surface edge of the blocks by virtue of the effect of the waveform part when the tyre is travelling on a road surface for which the friction coefficient is at a small enough level such as to be insufficient to cause deformation of the blocks, such as on ice. It is therefore possible to prevent the formation of a water film between the tread and the ice, which is well known as one factor causing a reduction in the friction coefficient on ice, and as a result it is possible to improve the performance on ice.

According to the present invention, the angle A is more preferably 70° or greater.

According to the present invention, preferably, the radially outermost part of the waveform part is a crest part on the at least one front surface side wall on which the reinforcing part is provided, and said crest part and the front surface edges extend in parallel.

According to the present invention having such a configuration, when a load is applied to the blocks, it is possible to prevent the generation of a twisting force which arises if the front surface edges and the crest part are not parallel, and as a result it is possible to improve the durability of the waveform part.

According to the present invention, preferably, the waveform part on the at least one front surface side wall on which the reinforcing part is provided has a predetermined width W and is formed over a predetermined distance D in the tyre radial direction, said predetermined distance D being between 60% and 100% of the height h of the blocks.

According to the present invention having such a configuration, the waveform part is formed over the predetermined distance D of between 60% and 100% of the height h of the blocks, and therefore it is possible for the effect of the front surface edge effectively biting into the snow to be more effectively demonstrated by virtue of the effect of the reinforcing part provided on the at least one front surface side wall, while the performance on ice is improved by the effect of such a waveform part provided on the at least front surface side wall. As a result it is possible to provide a balance between performance on ice and performance on snow more effectively.

Here, the predetermined distance D is a distance measured in the tyre radial direction between the crest part on the outermost side in the tyre radial direction and the crest part on the innermost side in the tyre radial direction, when the portion on the outermost side of the waveform part in the tyre radial direction is a crest part and the portion on the innermost side in the tyre radial direction is a crest part. Alternatively, the predetermined distance D is a distance measured in the tyre radial direction between the crest part on the outermost side in the tyre radial direction and the trough part on the innermost side in the tyre radial direction, when the portion on the outermost side of the waveform part in the tyre radial direction is a crest part and the portion on the innermost side in the tyre radial direction is a trough part.

According to the present invention, an offset amount dd between the crest part and the trough part of the waveform part in a direction extending along the upper surface of the blocks and passing through the front surface edges on the at least one front surface side wall on which the reinforcing part is provided, is preferably between 0.2 mm and 3 mm.

According to the present invention having such a configuration, it is possible to more effectively prevent excessive deformation of the blocks arising at the trough part of the waveform part by virtue of the reinforcing effect of the reinforcing part, when the tyre is travelling on a road surface for which the friction coefficient is at a sufficiently high level to cause deformation of the blocks, such as on snow, while it is also possible to ensure adequate deformation of the blocks afforded by the trough part of the waveform part when the tyre is travelling on a road surface for which the friction coefficient is at a small enough level such as to be insufficient to cause deformation of the blocks, such as on ice. It is therefore possible to more effectively achieve a localized high edge pressure, and as a result it is possible to provide a balance between performance on ice and performance on snow more effectively.

In other words, if the offset amount dd is smaller than 0.2 mm, it is difficult to ensure adequate deformation of the blocks afforded by the trough part of the waveform part. That is to say, when the offset amount dd is smaller than 0.2 mm, this causes an increase in the ground contact pressure in a region close to the front surface edge when the tyre is travelling on a road surface for which the friction coefficient is at a small enough level such as to be insufficient to cause deformation of the blocks, such as on ice, and therefore there is a risk of causing a drop in the performance on ice.

Furthermore, if the offset amount dd is greater than 3 mm, it is difficult to prevent excessive deformation of the blocks arising at the trough part of the waveform part, afforded by the reinforcing effect of the reinforcing part when the tyre is travelling on a road surface for which the friction coefficient is at a sufficiently high level to cause deformation of the blocks, such as on snow, and it is difficult to achieve a localized high edge pressure as a result, and there is a risk of causing a drop in the performance on snow.

According to the present invention, there are preferably three or fewer trough parts on the waveform part.

According to the present invention having such a configuration, it is possible to prevent excessive deformation of the blocks occurring when there are an excessively large number of (four or more) trough parts on the waveform part so it is possible to ensure more effective block deformation. As a result, it is possible to provide a balance between performance on ice and performance on snow more effectively.

According to the present invention, preferably, the waveform part comprises at least three crest parts and at least two trough parts, and the innermost part of the waveform part in the tyre radial direction is a crest part; and the ratio (Dmaxi/Dmini) of distances on the blocks in the tyre radial direction is between 1.0 and 1.3, where Dmini is a minimum distance which is the smallest distance on the waveform part between two crest parts adjacent to each trough part in the tyre radial direction, and Dmaxi is a maximum distance which is the greatest distance on the waveform part between two crest parts adjacent to each trough part in the tyre radial direction. Alternatively, according to the present invention, preferably, the waveform part comprises at least two trough parts, and the innermost part of the waveform part in the tyre radial direction is a trough part; and the ratio (Dmaxi/Dmini) of distances on the blocks in the tyre radial direction is between 1.0 and 1.3, where Dmini is a minimum distance which is either the smallest distance on the waveform part between two crest parts adjacent to each trough part in the tyre radial direction or the smallest distance between the trough part constituting the innermost part of the waveform part in the tyre radial direction and a crest part adjacent to said trough part in the tyre radial direction, and Dmaxi is a maximum distance which is either the greatest distance on the waveform part between two crest parts adjacent to each trough part in the tyre radial direction or the greatest distance between the trough part constituting the innermost part of the waveform part in the tyre radial direction and a crest part adjacent to said trough part in the tyre radial direction.

According to the present invention having such a configuration, it is possible to prevent uneven deformation of the actual waveform part provided on the at least one front surface side wall and as a result it is possible to improve the durability of the waveform part and the block. In other words, if this ratio is greater than 1.3, the waveform part is likely to deform unevenly when a load is applied, and as a result there is a risk of a reduction in the durability of the waveform part and also a reduction in the durability of the block.

According to the present invention, the blocks preferably comprise at least one narrow incision which opens in at least the upper surface thereof and extends in the tyre radial direction.

According to the present invention having such a configuration, the narrow incision causes a localized reduction in the block rigidity which is increased overall by the reinforcing part, so it is possible to improve grip between the blocks and the road surface. It is possible to improve the grip between the blocks and the road surface on ice in particular, and as a result the performance on ice can be improved.

Furthermore, the narrow incision makes it possible to facilitate deformation of the blocks when the tyre is travelling on a road surface for which the friction coefficient is at a sufficiently high level to cause deformation of the blocks, such as on snow. It is possible to more effectively produce a higher localized edge pressure afforded by the front surface edges, so the front surface edges can bite into the snow adequately and as a result the performance on snow can be further improved. Furthermore, the narrow incision opens in at least the upper surface of the block, and therefore functions as an additional space for removing a water film generated between the tread and the ice, which is one factor in causing a reduction in the friction coefficient on ice, and as a result the performance on ice can be further improved.

According to the present invention, the reinforcing part and the waveform part are preferably provided on the two front surface side walls of the blocks.

According to the present invention having such a configuration, the reinforcing part and the waveform part are provided on the two front surface side walls facing the auxiliary groove, and therefore the effect of improving the performance on the abovementioned winter road surface can be more reliably demonstrated during acceleration and deceleration, which are most important in terms of safety.

According to the present invention, the elastic modulus Ef of the material forming the reinforcing part is preferably at least 20 times greater than the elastic modulus Et of the rubber composition forming the tread and the blocks.

According to the present invention having such a configuration, it is possible for a high edge pressure to be produced more reliably at the front surface edges when the tyre is travelling on a road surface for which the friction coefficient is at a sufficiently high level to cause deformation of the blocks, such as on snow, and as a result the front surface edges can be made to bite more reliably into the snow. The performance on snow can be further improved as a result.

According to the present invention, the elastic modulus Ef of the material forming the reinforcing part is more preferably at least 40 times greater than the elastic modulus Et of the rubber composition forming the tread and the blocks. In addition, the elastic modulus Ef of the material forming the reinforcing part is more preferably no more than 60 times greater than the elastic modulus Et of the rubber composition forming the tread and the blocks, in order to prevent a high edge pressure when the tyre is travelling on a road surface for which the friction coefficient is at a small enough level such as to be insufficient to cause deformation of the blocks, such as on ice.

According to the present invention, the mean thickness t of the reinforcing part is preferably between 0.1 mm and 2.0 mm.

According to the present invention having such a configuration, it is possible to generate a high edge pressure on snow by virtue of the reinforcing effect of the reinforcing part, while it is possible to make the ground contact pressure of the blocks as a whole more uniform on ice, and as a result it is possible to more reliably improve the performance on snow while maintaining the performance on ice.

In other words, if the mean thickness t of the reinforcing part is less than 0.1 mm, the effect of reinforcing the blocks afforded by the reinforcing part is relatively reduced. That is to say, there is a reduction in the effect afforded by the reinforcing part of preventing excessive deformation of the blocks due to the trough part of the waveform part when the tyre is travelling on a road surface for which the friction coefficient is at a sufficiently high level to cause deformation of the blocks, such as on snow, and this risks causing a drop in the performance on snow. Furthermore, if the mean thickness t of the reinforcing part is greater than 2.0 mm, this relatively increases the effect of reinforcing the blocks afforded by the reinforcing part. That is to say, the ease of deformation of the blocks afforded by the trough part of the waveform part is impeded due to the increase in the reinforcing effect of the reinforcing part when the tyre is travelling on a road surface for which the friction coefficient is at a small enough level such as to be insufficient to cause deformation of the blocks, such as on ice, and a relatively large load is applied to the reinforcing part causing a localized increase in ground contact pressure, so there is a risk of a drop in the performance on ice.

According to the present invention, the reinforcing part is preferably provided over the whole region of the at least one front surface side wall.

According to the present invention having such a configuration, it is possible to more reliably generate a high edge pressure at the front surface edges when the tyre is travelling on a road surface for which the friction coefficient is at a sufficiently high level to cause deformation of the blocks, such as on snow, and as a result the front surface edges can be made to bite more reliably into the snow. It is possible to further improve the performance on snow as a result.

According to the present invention, the waveform part preferably includes at least part of the front surface edges.

According to the present invention having such a configuration, it is possible to more reliably generate a high edge pressure at the front surface edges when the tyre is travelling on a road surface for which the friction coefficient is at a sufficiently high level to cause deformation of the blocks, such as on snow. The front surface edges can therefore be made to bite more reliably into the snow and the performance on snow can be further improved as a result.

According to the present invention, the waveform part is preferably provided over the whole region of the at least one front surface side wall.

According to the present invention having such a configuration, it is possible to demonstrate the effect of improving the performance on ice by virtue of the waveform part up to the end period of wear of the tread while demonstrating an effect of improving the performance on snow afforded by the reinforcing part.

According to the present invention, preferably, the blocks further comprise a side wall edge formed at the position of intersection of the at least one front surface side wall on which the reinforcing part is provided and the side surface side walls; and the waveform part is provided with an offset of at least 0.5 mm from the side wall edge and the front surface edges of the at least one front surface side wall.

According to the present invention having such a configuration, the waveform part is offset by at least 0.5 mm from the side wall edge and the front surface edges of the at least one front surface side wall, and therefore it is possible to form a portion of the front surface side wall outside of the portion in which the waveform part is formed, i.e. a portion offset from the side wall edge and the front surface edges. This offset portion (the portion outside the waveform part) constitutes an additional reinforcing portion for preventing excessive deformation of the blocks produced at the trough part of the waveform part when the tyre is travelling on a road surface for which the friction coefficient is at a sufficiently high level to cause deformation of the blocks, such as on snow, and it is possible to improve the performance on snow more reliably as a result. If the offset amount is less than 0.5 mm, not only is the abovementioned effect afforded by the additional reinforcing portion lessened, the portion of the front surface side wall outside of the portion in which the waveform part is formed also becomes brittle with respect to deformation, and therefore there is a risk of the durability of the blocks being reduced.

According to the present invention, at least one side surface side wall of the blocks also preferably comprises the reinforcing part and the waveform part.

According to the present invention having such a configuration, the abovementioned effect of improving the performance on ice afforded by the reinforcing part and the waveform part can also be demonstrated in a situation in which a force is applied from the side of the block side surface, such as during turning, for example.

### Advantage of the Invention

The tyre tread according to the present invention and the tyre comprising said tread make it possible to achieve a higher-level balance between performance on snow and performance on ice.

### Brief Description of the Figures

[Fig. 1] is an oblique view schematically showing the tyre tread according to a first mode of embodiment of the present invention;
[Fig. 2] is an enlargement in cross section of a block of the tyre tread seen along the line II-II in fig. 1;
[Fig. 3] is an oblique view schematically showing the tyre tread according to a second mode of embodiment of the present invention;
[Fig. 4] is an enlargement in cross section of a block of the tyre tread seen along the line IV-IV in fig. 3;
[Fig. 5] is an oblique view schematically showing the tyre tread according to a third mode of embodiment of the present invention; and
[Fig. 6] is an enlargement in cross section of a block of the tyre tread according to the prior art.

### Mode of Embodiment of the Invention

The present invention will be described below with reference to the appended figures in accordance with modes of embodiment in which the present invention is applied to a pneumatic tyre tread and to a pneumatic tyre.

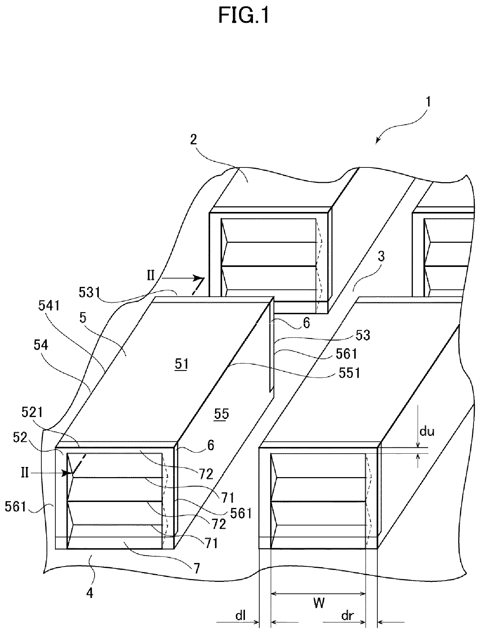

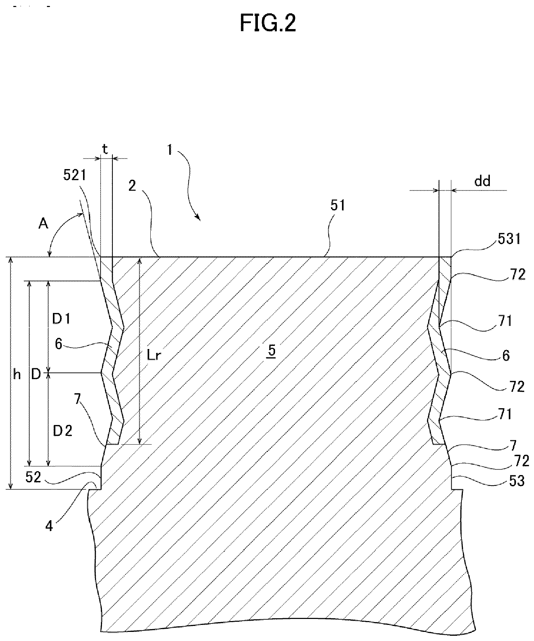

A tyre tread according to a first mode of embodiment of the present invention and a tyre comprising said tread will be described first of all with the aid of fig. 1 and fig. 2. Fig. 1 is an oblique view schematically showing a tyre tread according to the first mode of embodiment of the present invention, and fig. 2 is an enlargement in cross section of a block of the tyre tread seen along the line II-II in fig. 1.

First of all, as shown in fig. 1, the reference symbol 1 denotes a tyre tread according to the first mode of embodiment of the present invention. It should be noted that the exemplary tyre size of the tyre to which this tyre tread 1 is applied is 205/55R16.

The overall configuration of the tread 1 will be described next with the aid of fig. 1 and fig. 2.

First of all, as shown in fig. 1, the tread 1 is formed by at least one rubber composition having an elastic modulus Et obtained from a tensile test defined in ASTM D882-09, and comprises a ground contact surface 2 contacting a road surface while the tyre is running. Furthermore, two circumferential main grooves 3 extending in the tyre circumferential direction and a plurality of auxiliary grooves 4 extending in the tyre rotation axis direction are formed in the tread 1. In addition, a plurality of blocks 5 are formed in the tread 1, defined by the circumferential main grooves 3 and the auxiliary grooves 4.

The blocks 5 comprise: an upper surface 51 forming part of the ground contact surface 2; two side walls (front surface side walls) 52, 53 extending in the tyre rotation axis direction and formed in such a way as to face the auxiliary grooves 4; and two side walls (side surface side walls) 54, 55 extending in the tyre circumferential direction and formed in such a way as to face the circumferential main grooves 3.

Two front surface edges 521, 531 extending in the tyre rotation axis direction are formed on the upper surface 51 of the block 5 at positions intersecting the two front surface side walls 52, 53. Furthermore, two side surface edges 541, 551 extending in the tyre circumferential direction are formed on the upper surface 51 at positions intersecting the two side surface side walls 54, 55.

Furthermore, four side wall edges 561 are formed on the block 5 at positions intersected by the front surface side walls 52, 53 and the side surface side walls 54, 55.

A reinforcing part 6 comprising a material having an elastic modulus Ef which is higher than the elastic modulus Et of the rubber composition forming the tread 1 is then provided on the two front surface side walls 52, 53. In this mode of embodiment, the elastic modulus Et of the rubber composition forming the tread 1 is 4.8 MPa. The elastic modulus Et is preferably between 1.5 MPa and 15 MPa. Furthermore, in this mode of embodiment, the elastic modulus Ef of the material forming the reinforcing part 6 is 120 MPa. The elastic modulus Ef of the material forming the reinforcing part 6 is therefore formed in such a way as to be 25 times higher than the elastic modulus Et of the rubber composition forming the tread 1.

Here, the elastic modulus Et of the rubber composition forming the tread 1 and the elastic modulus Ef of the material forming the reinforcing part 6 may be calculated from a tensile test curve obtained from the tensile test defined in the standard ASTM D882-09.

The reinforcing part 6 on the block 5 of the tread 1 will be described next.

As shown in fig. 1 and fig. 2, according to this mode of embodiment, the reinforcing parts 6 are provided in such a way as to form at least part of the front surface side walls 52, 53. Furthermore, the reinforcing parts 6 are preferably provided in such a way as to face the auxiliary grooves 4 over a region of at least 70% of the whole region of the front surface side walls 52, 53.

Furthermore, the reinforcing parts 6 are provided in such a way as to have a mean thickness t (see fig. 2) of 2.0 mm or less, and preferably 1.0 mm or less. Here, the thickness t of the reinforcing parts 6 is measured in a direction perpendicular to the surfaces of the front surface side walls 52, 53 on which the reinforcing parts 6 are provided facing the auxiliary grooves 4. The value of the "mean thickness" of the reinforcing parts 6 is the mean value measured from the edge of the reinforcing parts 6 on the bottom surface side of the auxiliary grooves 4 to the edge thereof on the upper surface 51 side of the blocks 5, in other words the mean value over essentially the whole surface of the reinforcing parts 6. According to this mode of embodiment, the reinforcing parts 6 are provided in such a way as to include the front surface edges 521, 531 and to form part of the front surface side walls 52, 53, the mean thickness t thereof being 0.5 mm. Here, the mean thickness t of the reinforcing parts 6 is preferably between 0.1 mm and 2.0 mm, and more preferably between 0.2 mm and 1.0 mm.

Here, as shown in fig. 1, according to this mode of embodiment, the outermost edges, in the tyre radial direction, of the reinforcing parts 6 provided on the front surface side walls 52, 53 are provided in such a way as to lie over the whole of the front surface edges 521, 531 in the width direction, but the outermost edges of the reinforcing parts 6 in the tyre radial direction may equally be provided in such a way as to lie over part of the front surface edges 521, 531 in the width direction.

The upper surface 51 of the blocks 5 of the tread 1 will be described next.

As shown in fig. 1, the upper surface 51 forms part of the ground contact surface 2 of the tread 1 contacting the road surface when the tyre is running, said upper surface 51 being defined as a region of the block 5 where a portion thereof can contact the road surface under specific conditions. The upper surface 51 comprises the front surface edges 521, 531 which are formed at positions intersecting the front surface side walls 52, 53 and extend in the tyre rotation axis direction, and the side surface edges 541, 551 which are formed at positions intersecting the side surface side walls 54, 55 and extend in the tyre circumferential direction, said region being delimited by the front surface edges 521, 531 and the side surface edges 541, 551.

A waveform part 7 of the blocks 5 of the tread 1 will be described next.

As shown in fig. 1 and fig. 2, according to this mode of embodiment, the waveform parts 7 are provided on the front surface side walls 52, 53 on which the reinforcing parts 6 are provided, in such a way as to form at least part of the front surface side walls 52, 53 and to form at least part of the reinforcing parts 6. The outermost part of the waveform parts 6 in the tyre radial direction is a crest part 72 extending linearly in the tyre rotation axis direction and having a width W (see fig. 1), the crest part 72 being formed in such a way as to extend in parallel with the front surface edges 521, 531 of the front surface side walls 52, 53 on which the reinforcing parts 6 are provided. Other crest parts 72 are also formed in such a way as to likewise extend linearly in parallel, and trough parts 71 are also formed in such a way as to likewise extend linearly in parallel.

Furthermore, the waveform parts 7 comprise at least two of the crest parts 72 and at least one of the trough parts 71, and are formed in such a way that there are three or fewer of the trough parts 71. According to this mode of embodiment, the waveform parts 7 comprise three crest parts 72 and two trough parts 71. According to this mode of embodiment, the waveform part 7 refers to a portion of a region having the width W (see fig. 1) extending in the tyre rotation axis direction, and formed over a distance D (see fig. 2) in the tyre radial direction over an area from the crest part 72 on the outermost side in the tyre radial direction to the crest part 72 on the innermost side in the tyre radial direction.

As shown in fig. 1, the waveform parts 7 are then provided with an offset of at least 0.5 mm from the front surface edges 521, 531 of the front surface side walls 52, 53 of the blocks 5 and from the side wall edges 561 constituting the intersection between the front surface side walls 52, 53 and the side surface side walls 54, 55. According to this mode of embodiment, the offset amount du of the waveform parts 7 from the front surface edges 521, 531 is 1.0 mm, and the offset amounts dl, dr from the side wall edges 561 are both 1.25 mm.

The dimensional and angular relationships of the upper surface 51 of the blocks 5 and the reinforcing parts 6 and waveform parts 7 will be described next with the aid of fig. 2.

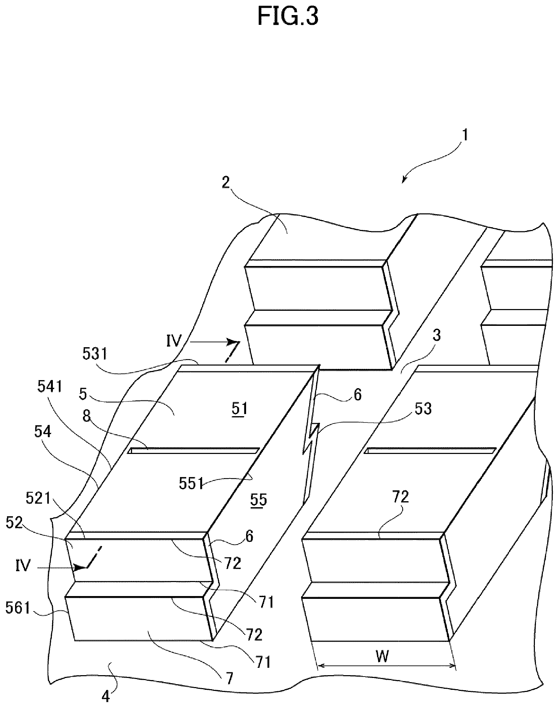

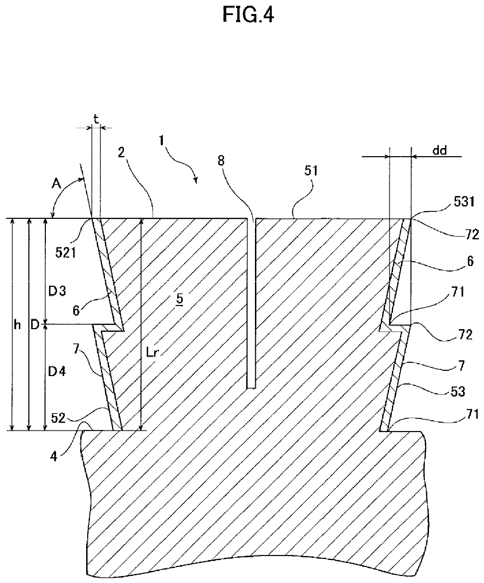

As shown in fig. 2, according to this mode of embodiment, the length Lr of the reinforcing parts 6 in the tyre radial direction, as seen in a cross section perpendicular to the upper surface 51 and the front surface edges 521, 531 of the blocks, is formed in such a way as to be at least 80% of the height h of the blocks 5. According to this mode of embodiment, the height h of the blocks 5 is 10 mm and the length Lr of the reinforcing parts 6 is 8 mm. The length Lr of the reinforcing parts 6 is therefore formed in such a way as to be 80% of the height h of the blocks 5. It should be noted that in a second mode of embodiment shown in fig. 3 and fig. 4 which will be described later, the length Lr of the reinforcing parts 6 is 100% of the height h of the blocks 5.

Moreover, the height h of the blocks is measured in the tyre radial direction between the upper surface 51 of the blocks 5 and the deepest part in the tyre radial direction of the auxiliary grooves 4 which are faced by the front surface side walls 52, 53.

Next, an angle A, seen from the tyre rotation axis direction between an imaginary line extending along the upper surface 51 of the blocks 5 and passing through the front surface edges 521, 531, and an imaginary line joining the crest part 72 on the radially outermost side of the waveform part 7 and the trough part 71 adjacent to said crest part 72 in the tyre radial direction, is formed in such a way as to be between 60° and 90°, and preferably between 70° and 90°. According to this mode of embodiment, the angle A is 75°.

Next, according to this mode of embodiment, a distance in the tyre radial direction (the distance D shown in fig. 2) between the crest part 72 on the outermost side of the waveform parts 7 in the tyre radial direction and the crest part 72 on the innermost side in the tyre radial direction is formed in such a way as to be at least 60% of the height h of the blocks 5. It should be noted that in the second mode of embodiment shown in fig. 3 and fig. 4, the distance D of the waveform parts 7 is 100% of the height h of the blocks 5. According to this mode of embodiment, the distance D between the crest part 72 on the outermost side of the waveform parts 7 in the tyre radial direction and the crest part 72 on the innermost side in the tyre radial direction is 8 mm. The distance D between the crest part 72 on the outermost side of the waveform parts 7 in the tyre radial direction and the crest part 72 on the innermost side in the tyre radial direction is therefore formed in such a way as to be 80% of the height h of the blocks 5.

Moreover, when the portion on the outermost side of the waveform part 7 in the tyre radial direction is a crest part 72 and the portion on the innermost side in the tyre radial direction is a trough part 71, as in the second mode of embodiment to be described later (see fig. 4 in particular) (in this case, the waveform part 7 refers to a portion of a region having the width W and formed over the distance D (see fig. 2) in the tyre radial direction from the crest part 72 on the outermost side in the tyre radial direction to the trough part 71 on the innermost side in the tyre radial direction), this distance D is the distance in the tyre radial direction between the crest part 72 on the outermost side of the waveform part 7 in the tyre radial direction and the trough part 71 on the innermost side in the tyre radial direction (the distance D shown in fig. 4).

As shown in fig. 2, the waveform parts 7 are provided in such a way that an offset amount dd between the crest parts 72 and the trough parts 71 in a direction extending along the upper surface 51 of the blocks 5 and passing through the front surface edges 521, 531, is 3.0 mm or less. According to this mode of embodiment, the offset amount dd is 0.5 mm. Here, the offset amount dd of the waveform parts 7 is preferably between 0.2 mm and 3.0 mm.

Next, according to this mode of embodiment, the waveform parts 7 comprise at least three crest parts 72 and at least two trough parts 71, and the innermost part of the waveform parts 7 in the tyre radial direction is a crest part 72; and the ratio (Dmaxi/Dmini) of the minimum distance (Dmini, e.g., the distance D1 or the distance D2 shown in fig. 2) between two crest parts 72 adjacent to a trough part 71 in the tyre radial direction, and the maximum distance (Dmaxi, e.g., the distance D1 or the distance D2 shown in fig. 2) between two crest parts 72 adjacent to the other trough part 71 in the tyre radial direction, is formed in such a way as to be between 1.0 and 1.3, where Dmini and Dmaxi are distances on the waveform parts 7 in the tyre radial direction. As shown in fig. 2, according to this mode of embodiment, the waveform parts 7 comprise three crest parts 72 and two trough parts 71 and the innermost part of the waveform parts 7 in the tyre radial direction is a crest part 72, and the distance between two crest parts 72 radially adjacent to the trough part 71 on the outside in the tyre radial direction (the distance D1 shown in fig. 2) and the distance between two crest parts 72 radially adjacent to the other trough part 71 on the inside in the tyre radial direction (the distance D2 shown in fig. 2) are both equal to 4 mm. According to this mode of embodiment, the ratio (Dmaxi/Dmini) is therefore formed in such a way as to be 1.0.

It should be noted that when the waveform parts 7 comprise at least two crest parts 72 and at least two trough parts 71 and the portion of the waveform parts 7 on the outermost side in the tyre radial direction is a crest part 72 and the portion on the innermost side in the tyre radial direction is a trough part 71, as in the second mode of embodiment (see fig. 3 and fig. 4) to be described later, the ratio (Dmaxi/Dmini) of the minimum distance or the maximum distance (Dmini or Dmaxi, e.g., the distance D3 shown in fig. 4) between two crest parts 72 adjacent to a trough part 71 in the tyre radial direction, and the minimum distance or the maximum distance (Dmini or Dmaxi, e.g., the distance D4 shown in fig. 4) between the trough part 71 constituting the innermost part of the waveform parts 7 in the tyre radial direction and the crest part 72 adjacent to said trough part 71 in the tyre radial direction, is formed in such a way as to be between 1.0 and 1.3, where Dmini and Dmaxi are distances on the waveform parts 7 in the tyre radial direction.

When the portion of the waveform parts 7 on the innermost side in the tyre radial direction is a crest part 72 (first mode of embodiment), the minimum distance Dmini and the maximum distance Dmaxi are thus the distance between two crest parts 72 adjacent to a trough part 71 in the tyre radial direction, and the distance between two crest parts 72 adjacent to the other trough part 71 in the tyre radial direction. Furthermore, when the portion of the waveform parts 7 on the innermost side in the tyre radial direction is a trough part 71 (second mode of embodiment to be described later), the minimum distance Dmini and the maximum distance Dmaxi are thus the distance between two crest parts 72 adjacent to a trough part 71 in the tyre radial direction, or the distance between the trough part 71 constituting the innermost part of the waveform parts 7 in the tyre radial direction and the crest part 72 adjacent to said trough part 71 in the tyre radial direction.

In other words, when the portion on the outermost side in the radial direction is a crest part 72 and the portion on the innermost side in the tyre radial direction is a crest part 72, the minimum distance Dmini and the maximum distance Dmaxi on the waveform parts 7 are selected from either of at least two "distances between two crest parts 72 adjacent to a trough part 71 in the tyre radial direction". For example, in a case in which four crest parts 72 are formed and three trough parts 71 are formed, the minimum distance Dmini and the maximum distance Dmaxi are selected from any of three "distances between two crest parts 72 adjacent to a trough part 71 in the tyre radial direction".

Furthermore, when the portion on the outermost side in the tyre radial direction is a crest part 72 and the portion on the innermost side in the tyre radial direction is a trough part 71, the minimum distance Dmini and the maximum distance Dmaxi on the waveform parts 7 are selected from either of at least one "distance between two crest parts 72 adjacent to a trough part 71 in the tyre radial direction" and at least one "distance between a trough part 71 constituting the innermost part of the waveform parts 7 in the tyre radial direction and a crest part 72 adjacent to said trough part 71 in the tyre radial direction". For example, when the portion on the innermost side in the tyre radial direction is a trough part 71 and five crest parts 72 are formed and three trough parts 71 are formed, the minimum distance Dmini and the maximum distance Dmaxi are selected from any of four "distances between two crest parts 72 adjacent to a trough part 71 in the tyre radial direction" and one "distance between the trough part 71 constituting the innermost part of the waveform parts 7 in the tyre radial direction and the crest part 72 adjacent to said trough part 71 in the tyre radial direction".

It should be noted that the tyre tread 1 described above is particularly suitable for a winter tyre.

The main action and effect of this mode of embodiment will be described next.

When the tyre is travelling on a road surface for which the friction coefficient is at a small enough level such as to be insufficient to cause deformation of the blocks 5, such as on ice, and a drive force or a braking force generated in the tyre rotation direction is applied, the blocks 5 are likely to deform because of the shape of the crest parts 72 and the trough parts 71 of the waveform parts 7, and in particular because the trough parts 71 are formed, even though the reinforcing part 6 is provided over the majority of the region of the front surface side walls 52, 53, as in this mode of embodiment, and therefore it is possible to limit the generation of a high edge pressure at the front surface edges 521, 531. In addition, the angle A is 90° or less, so under such conditions, a moment acting geometrically in a direction causing a reduction in the edge pressure at the front surface edges 521, 531 is generated at the waveform parts 7 of the blocks 5. As a result, the tread 1 according to this mode of embodiment makes it possible to prevent the formation of a water film between the tread and the ice, which is well known as one factor causing a reduction in the friction coefficient on ice, and as a result it is possible to improve the performance on ice.

On the other hand, when the tyre is travelling on a road surface for which the friction coefficient is at a sufficiently high level to cause deformation of the blocks, such as on snow, and a drive force or a braking force generated in the tyre rotation direction is applied, excessive deformation of the blocks 5 is limited by virtue of the reinforcing effect of the reinforcing parts 6, even though the waveform parts 7 are provided on the front surface side walls 52, 53, as in this mode of embodiment, and in particular even though the blocks 5 are likely to deform because of the trough parts 71 on the waveform parts 7. In addition, the waveform parts 7 are provided with an offset of at least 0.5 mm from the front surface edges 521, 531 and the side wall edges 561 of the front surface side walls 52, 53, and therefore a portion of the front surface side walls 52, 53 outside the region in which the waveform parts 7 are formed (i.e., a portion offset from the front surface edges 521, 531 and the side wall edges 561) is present, whereby it is possible to demonstrate an additional reinforcing effect for preventing excessive deformation of the blocks 5 due to the trough parts 71 of the waveform parts 7. As a result, the tread 1 according to this mode of embodiment makes it possible to effectively generate a high edge pressure afforded by the effect of the reinforcing parts 6 at the front surface edges 521, 531 of the front surface side walls 52, 53, and it is possible to improve the performance on snow as a result.

A variant example of the first mode of embodiment of the present invention will be described next.

The mean thickness t of the reinforcing parts 6 is between 0.1 mm and 2.0 mm, and preferably between 0.2 mm and 1.0 mm. The mean thickness t of the reinforcing parts 6 may be different on the front surface side walls 52, 53 of the same block 5.

Furthermore, the reinforcing parts 6 provided on at least a partial region of the front surface side walls 52, 53 as described above may be provided in regions of differing ratios on the front surface side walls 52, 53 of the same block 5.

Furthermore, according to the first mode of embodiment described above, the cross-sectional shape of the crest parts 72 and the trough parts 71 seen in a cross section of the waveform parts 7 perpendicular to the upper surface 51 and the front surface edges 521, 531 of the blocks is formed in such a way as to comprise corner parts, but a polygonal or arc shape is equally feasible and these shapes may be mixed on a single waveform part 7.

Furthermore, as described above, the waveform parts 7 are provided on the front surface side walls 52, 53 in such a way as to form at least part of said front surface side walls 52, 53 and in such a way as to form at least part of the reinforcing part 6, but the waveform parts may differ on the front surface side walls 52, 53 on the same block 5, and the waveform parts may be provided in regions of differing ratios on the front surface side walls 52, 53 of the same block.

In addition to a material based on natural resin (including a rubber material) mentioned above, a substance in which fibres are mixed or impregnated with a material based on natural rubber, or a thermoplastic resin or a substance laminated or mixed therewith, or another material, may equally be used as the material of the reinforcing parts 6, and it is also possible to use said material in combination with a woven fabric or nonwoven fabric etc. impregnated with a material based on natural rubber with the aim of improving adhesion with the block 5 or providing further reinforcement. A fibre material such as a woven fabric or nonwoven fabric impregnated with a material based on natural rubber may be used alone as the reinforcing part 6. Furthermore, different materials may also be used on the front surface side walls 52, 53 of the same block 5.

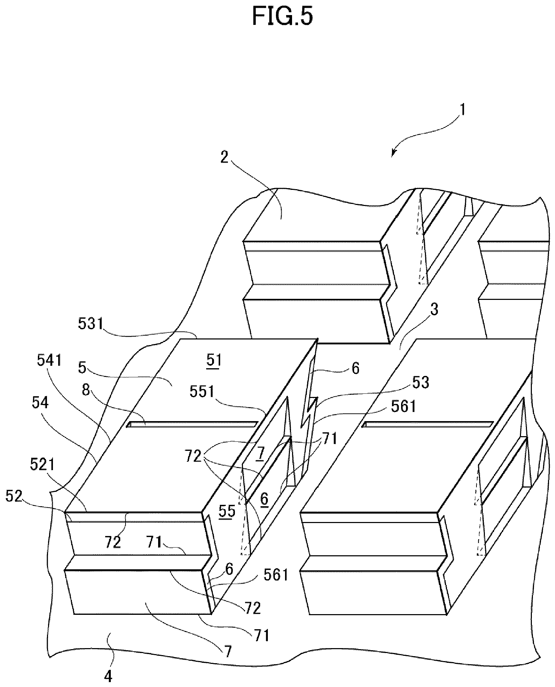

Furthermore, according to this mode of embodiment, the reinforcing parts 6 are provided only on the front surface side walls 52, 53 of the blocks facing the auxiliary grooves 4, but the reinforcing parts 6 may equally be provided on the side walls (side surface side walls) 54, 55 of the blocks facing the circumferential main grooves 3 (see the third mode of embodiment in fig. 5 to be described later). As a result, the effect of performance on ice and performance on snow in the tyre width direction afforded by the reinforcing parts 6 provided on the side surface side walls 54, 55, especially during turning, can be improved, and steering performance in particular can be improved.

A tyre tread according to a second mode of embodiment of the present invention will be described next with the aid of fig. 3 and fig. 4. Fig. 3 is an oblique view schematically showing the tyre tread according to the second mode of embodiment of the present invention, and fig. 4 is an enlargement in cross section of a block of the tyre tread seen along the line IV-IV in fig. 3.

It should be noted that the second mode of embodiment will be described mainly in terms of constituent parts which are different from those of the abovementioned first mode of embodiment and constituent parts which are the same will not be described again.

First of all, as shown in fig. 3, a tread 1 according to the second mode of embodiment comprises: a ground contact surface 2; two circumferential main grooves 3 and a plurality of auxiliary grooves 4; and a plurality of blocks 5 defined by the circumferential main grooves 3 and the auxiliary grooves 4, in the same way as in the abovementioned first mode of embodiment. The blocks 5 comprise two front surface side walls 52, 53 and two side surface side walls 54, 55 in the same way as in the abovementioned first mode of embodiment. The upper surface 51 comprises front surface edges 521, 531 on edges intersecting the front surface side walls 52, 53, and further comprises side surface edges 541, 551 on edges intersecting the side surface side walls 54, 55. Furthermore, four side wall edges 561 are formed on the blocks 5 at positions intersected by the front surface side walls 52, 53 and the side surface side walls 54, 55.

According to this mode of embodiment, the reinforcing parts 6 are provided in such a way as to form at least part of the front surface side walls 52, 53 and are preferably provided in such a way as to form at least 70% of the whole region of the front surface side walls 52, 53 and more preferably in such a way as to face the auxiliary grooves 4 over the whole region of the front surface side walls 52, 53. Furthermore, the reinforcing parts 6 are provided in such a way as to have a mean thickness t (shown in fig. 4) of 2.0 mm or less, and preferably 1.0 mm or less. In the example shown in fig. 3, the reinforcing parts 6 are provided over the whole region, i.e., a region of 100%, of the front surface side walls 52, 53, and are provided in such a way as to include the whole of the front surface edges 521, 531. The mean thickness t thereof is 0.5 mm.

According to this mode of embodiment, waveform parts 7 are provided on the front surface side walls 52, 53 on which the reinforcing parts 6 are provided, in such a way as to form at least part of the front surface side walls 52, 53 and in such a way as to form at least part of the reinforcing parts 6, and are preferably provided over the whole region of the front surface side walls 52, 53. In addition, the waveform parts 7 are provided in such a way as to include at least part of the front surface edges 521, 531. The outermost part of the waveform parts 7 in the tyre radial direction is a crest part 72 extending linearly in the tyre rotation axis direction and having a width W (see fig. 3), said crest part 72 extending linearly at the same position and with the same width W as the front surface edges 521, 531 of the front surface side walls 52, 53 on which the reinforcing parts 6 are provided. The waveform parts 7 are constructed in such a way as to have at least two crest part 72 and at least one trough part 71, and there are three or fewer trough parts 71. According to this mode of embodiment, the waveform parts 7 comprise two crest parts 72 and two trough parts 71, the waveform parts 7 are provided over the whole region of the front surface side walls 52, 53, i.e. a region of 100%, and the waveform parts 7 include all of the front surface edges 521, 531.

As shown in fig. 4, according to this mode of embodiment, an offset amount dd between the crest parts 72 and the trough parts 71 in a direction extending along the upper surface 51 of the blocks 5 and passing through the front surface edges 521, 531 is provided in such a way as to be 3.0 mm or less. According to this mode of embodiment, the offset amount dd is 1.0 mm.

Furthermore, as shown in fig. 4, when the waveform parts 7 comprise at least two trough parts 71, the portion of the waveform parts 7 on the outermost side in the tyre radial direction is a crest part 72, and the portion on the innermost side in the tyre radial direction is a trough part 71, as in this mode of embodiment, the ratio (Dmaxi/Dmini) of the minimum distance or the maximum distance (Dmini or Dmaxi, e.g., the distance D3 shown in fig. 4) between two crest parts 72 adjacent to a trough part 71 in the tyre radial direction, or the minimum distance or the maximum distance (Dmini or Dmaxi, e.g., the distance D4 shown in fig. 4) between the trough part 71 constituting the innermost part of the waveform parts 7 in the tyre radial direction and the crest part 72 adjacent to said trough part 71 in the tyre radial direction, is formed in such a way as to be between 1.0 and 1.3, where Dmini and Dmaxi are distances on the blocks 5 in the tyre radial direction. As shown in fig. 4, according to this mode of embodiment, the waveform parts 7 comprise two trough parts 71 and the distance (the distance D3 shown in fig. 4) between two crest parts 72 adjacent in the tyre radial direction to the trough part 71 on the outermost side in the tyre radial direction is 5.3 mm, and the distance (the distance D4 shown in fig. 4) between the trough part 71 on the innermost side in the tyre radial direction and the radially adjacent crest part 72 is 4.7 mm. According to this mode of embodiment, the ratio (Dmaxi/Dmini) is therefore formed in such a way as to be 1.12.

Furthermore, a narrow incision 8 is formed in the blocks 5 of the tread 1 according to the second mode of embodiment. The narrow incision 8 opens in the upper surface 51 and extends in the tyre width direction while also extending in the tyre radial direction (also including cases in which said narrow incision 8 is angled with respect to the tyre radial direction in a range such as to demonstrate various functions thereof). According to this mode of embodiment, the narrow incision 8 does not open in the side surface side walls 54, 55 but it may open in the side surface side walls 54, 55. It should be noted that as described above, the narrow incision 8 may extend at a predetermined angle with respect to the tyre radial direction in a range such as to demonstrate various functions thereof. Furthermore, the "tyre width direction" is a direction perpendicular to the tyre circumferential direction in this mode of embodiment, but also includes cases of extension in the tyre width direction at a predetermined angle. The reinforcing parts 6 are provided on the two front surface side walls 52, 53. In this mode of embodiment, the opening width of the narrow incision 8 in the upper surface 51 is 0.4 mm and the depth in the tyre radial direction is 8 mm.

According to this mode of embodiment, as shown in fig. 4, the length Lr of the reinforcing parts 6 in the tyre radial direction seen in a cross section perpendicular to the upper surface 51 and front surface edges 521, 531 of the blocks is formed in such a way as to be at least 80% of the height h of the blocks 5. According to this mode of embodiment, the reinforcing parts 6 are provided over the whole region of the front surface side walls 52, 53, as described above, and therefore the length Lr of the reinforcing parts 6 is formed in such a way as to be 100% of the height h of the blocks 5.

On the front surface side walls 52, 53 on which the reinforcing parts 6 are provided, an angle A between an imaginary line extending along the upper surface 51 of the blocks 5 and passing through the front surface edges 521, 531, and an imaginary line joining the crest part 72 on the outermost side of the waveform parts 7 in the tyre radial direction and the trough part 71 adjacent to said crest part 72 in the tyre radial direction, is formed in such a way as to be between 60° and 90°, and preferably between 70° and 90°. According to this mode of embodiment, the angle A is 78°.

Next, according to this mode of embodiment, the distance (the distance D shown in fig. 4) between the crest part 72 on the outermost side in the tyre radial direction and the trough part 71 on the innermost side in the tyre radial direction is formed in such a way as to be at least 60% of the height h of the blocks 5. According to this mode of embodiment, the waveform parts 7 are provided over the whole region of the front surface side walls 52, 53, and therefore the distance (the distance D shown in fig. 4) between the crest part 72 on the outermost side of the waveform parts 7 in the tyre radial direction and the trough part 71 on the innermost side in the tyre radial direction is formed in such a way as to be 100% of the height h of the blocks 5.

The main action and effect of the second mode of embodiment will be described next.

According to the second mode of embodiment, the reinforcing parts 6 and the waveform parts 7 are provided over the whole region of the front surface side walls 52, 53. As a result, according to the second mode of embodiment, in addition to the action and effect of the abovementioned first mode of embodiment, it is also possible to demonstrate an effect of improving performance on ice afforded by the waveform parts 7, even when wear of the blocks 5 on the tread 1 has progressed, while demonstrating an effect of improving the performance on snow afforded by the reinforcing parts 6. Furthermore, the portion of the waveform parts 7 on the innermost side in the tyre radial direction is formed by a trough part 71, and therefore it is possible to prevent buckling deformation of the waveform parts 7 by virtue of a synergistic effect with the reinforcing parts 6, even when the blocks 5 have been worn by 70% or more in terms of the height h thereof. As a result, when the tyre is travelling on a road surface for which the friction coefficient is sufficient to cause deformation of the blocks, such as on snow, it is possible to demonstrate an effect of achieving a locally high edge pressure even when wear of the blocks 5 has progressed. The front surface edges 521, 531 can therefore be made to bite effectively into the snow and as a result it is possible to maintain a high performance on snow over a long period of time. Furthermore, when the tyre is travelling on a road surface for which the friction coefficient is insufficient to cause deformation of the blocks, such as on ice, it is possible to generate a moment force in a direction causing a reduction in the ground contact pressure at a portion in the region of the front surface edges 521, 531 of the blocks 5 by virtue of the effect of the waveform parts 7. It is therefore possible to prevent the formation of a water film between the tread and the ice, which is well-known as one factor causing a reduction in the friction coefficient on ice, and high performance on ice can be maintained over a long period of time as a result.

It should be noted that the bottom surface of the auxiliary groove 4 is not covered by the reinforcing parts 6 in this mode of embodiment, but it is equally possible to extend the edges of the reinforcing parts 6 inwardly in the tyre radial direction so that the reinforcing parts 6 cover part or all of the bottom surface of the grooves 3, 4, with the aim of improving producibility of the tread 1 when the reinforcing parts 6 are provided, among other things.

A tyre tread according to a third mode of embodiment of the present invention will be described next with the aid of fig. 5. Fig. 5 is an oblique view schematically showing the tyre tread according to the third mode of embodiment of the present invention.

It should be noted that the third mode of embodiment will be described mainly in terms of constituent parts which are different from those of the abovementioned first and second modes of embodiment and constituent parts which are the same will not be described again.

As shown in fig. 5, a tread 1 according to the third mode of embodiment comprises: a ground contact surface 2; two circumferential main grooves 3 and a plurality of auxiliary grooves 4; and a plurality of blocks 5 defined by the circumferential main grooves 3 and the auxiliary grooves 4, in the same way as in the abovementioned first and second modes of embodiment. The blocks 5 comprise two front surface side walls 52, 53 and two side surface side walls 54, 55 in the same way as in the abovementioned first and second modes of embodiment. The upper surface 51 comprises front surface edges 521, 531 on edges intersecting the front surface side walls 52, 53, and further comprises side surface edges 541, 551 on edges intersecting the side surface side walls 54, 55. Furthermore, four side wall edges 561 are formed on the blocks 5 at positions intersected by the front surface side walls 52, 53 and the side surface side walls 54, 55.

According to the third mode of embodiment, the reinforcing parts 6 are provided in such a way as to form at least part of the front surface side walls 52, 53, in the same way as in the abovementioned first and second modes of embodiment. Furthermore, according to this mode of embodiment, the reinforcing parts 6 are provided in such a way as to form at least part of the side surface side walls 54, 55.

According to this mode of embodiment, the waveform parts 7 are provided on the front surface side walls 52, 53 on which the reinforcing parts 6 are provided, in such a way as to form at least part of the front surface side walls 52, 53 and in such a way as to form at least part of the reinforcing parts 6, and additionally in such a way as to form at least part of the side surface side walls 54, 55 on which the reinforcing parts 6 are provided. The waveform parts 7 provided on the side surface side walls 54, 55 are provided with an offset of at least 0.5 mm from the side surface edges 541, 551 and the side wall edges 561 of the side surface side walls 54, 55 of the blocks 5.

According to this mode of embodiment, the waveform parts 7 comprise two crest parts 72 and two trough parts 71 on the front surface side walls 52, 53, and also comprise three crest parts 72 and two trough parts 71 on the side surface side walls 54, 55. In addition, the waveform parts 7 are provided in such a way as to form the whole region of the reinforcing parts 6 on both the front surface side walls 52, 53 and the side surface side walls 54, 55.

The main action and effect of the third mode of embodiment will be described next.

According to the third mode of embodiment, the reinforcing parts 6 and the waveform parts 7 are further provided on the side surface side walls 54, 55, in addition to on the front surface side walls 52, 53. As a result, according to the third mode of embodiment, in addition to the action and effect of the abovementioned first and second modes of embodiment, it is also possible to achieve an effect of improving the performance on ice and the performance on snow afforded by the reinforcing parts 6 and the waveform parts 7 during turning, so it is possible to travel more safely on an icy and snowy road surface.

It should be noted that, as a variant example of the third mode of embodiment, the shape of the waveform parts 7 provided on the side surface side walls 54, 55 may differ from that of the waveform parts 7 provided on the front surface side walls 52, 53, and the shape and material of the reinforcing parts 6 provided on the side surface side walls 54, 55 may be different from those of the reinforcing parts 6 provided on the front surface side walls 52, 53.

Preferred modes of embodiment of the present invention have been described above, but the present invention is not limited to the modes of embodiment depicted and the present invention may be implemented with a number of variations.

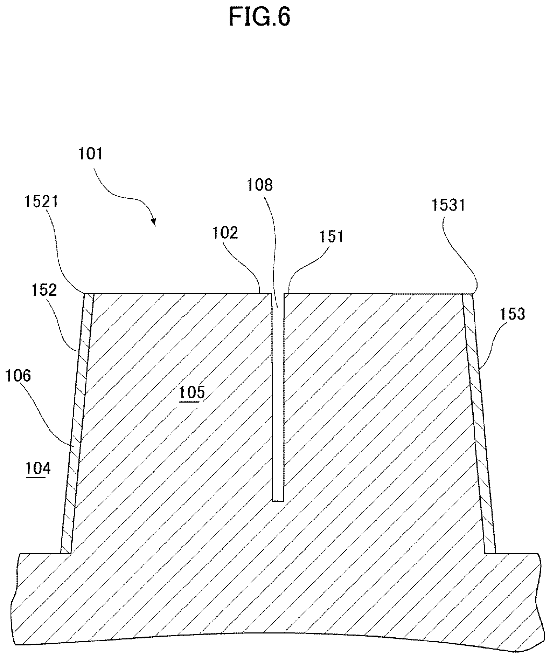

Moreover, fig. 6 is an enlargement in cross section of a block of a tyre tread according to the prior art. A block 105 of a tyre tread 101 according to the prior art comprises an upper surface 151 forming part of a ground contact surface 102, and front surface edges 1521, 1531 are formed at the intersection between the upper surface 151 and front surface side walls 152, 153. A narrow incision 108 opening in the upper surface 151 and extending in the transverse direction and in the tyre radial direction is formed in the block 105. Reinforcing parts 106 are provided on the two front surface side walls 152, 153 in such a way as to include the whole of the front surface edges 1521, 1531. The mean thickness t of the reinforcing parts 106 is 0.5 mm and the reinforcing parts 106 are provided in such a way as to face auxiliary grooves 104 over the whole region of the front surface side walls 152, 153. Waveform parts are not provided on the front surface side walls 152, 153 of the blocks 105 in the tyre tread 101 according to the prior art.

### Exemplary Embodiment

In order to clarify the effect of the present invention, a description will be given of verification results resulting from an analysis of the blocks of the tyre tread according to the conventional example in which a known form of reinforcing parts is provided, and the blocks of the tyre tread according to an exemplary embodiment of the present invention, using a simulation (finite element method) employing commercially-available computer software.

The exemplary embodiment constitutes a block model provided with reinforcing parts according to the abovementioned second mode of embodiment.

The size of the two types of block models according to the exemplary embodiment and the conventional example employed in the simulation was set in both cases as follows: a three-dimensional body having a short-edge length of 12 mm, a long-edge length of 15 mm and a height of 10 mm at the upper surface, formed from the same rubber-based material (elastic modulus 5.4 MPa) was used, and a narrow incision was set at a width of 0.4 mm and a depth of 8 mm opening in the upper surface of the block in each case. The reinforcing parts were formed from the same material (elastic modulus 270 MPa) and were provided over the whole region of the front surface side walls to a mean thickness of 0.5 mm, the elastic modulus of the material of the reinforcing parts being set in such a way as to be 50 times the elastic modulus of the rubber-based material of the blocks.

The block models set in this way were subjected to a load suitable for a tyre, and in this state the maximum ground contact pressure generated by the blocks under road surface conditions corresponding to conditions on snow and the friction coefficient under road surface conditions corresponding to conditions on ice were obtained. The calculation results are shown in table 1. In table 1, the calculated values are represented as an index where the conventional example is 100, and a larger numerical value denotes a more favourable result.

**[Table 1]**

| | Exemplary Embodiment | Conventional Example |
|---|---|---|
| Maximum ground contact pressure on snow (index) | 124 | 100 |
| Friction coefficient on ice (index) | 109 | 100 |

As shown in table 1, it could be confirmed that the tyre tread according to the exemplary embodiment was able to effectively improve the performance on snow and the performance on ice.

### Key to Symbols

1... Tyre tread
2... Ground contact surface
3... Circumferential main groove
4... Auxiliary groove
5... Block
51... Block upper surface (whereof a part includes the ground contact surface 2)
52, 53... Side wall on circumferential direction side, front surface side wall
521, 531... Front surface edge
54, 55... Side wall on tyre width direction side, side surface side wall
541, 551... Side surface edge
561... Side wall edge
6... Reinforcing part
7... Waveform part
71... Crest part
72... Trough part
8... Narrow incision (sipe)

## Claims

1. Tyre tread (1) formed by at least one rubber composition and having a ground contact surface (2) contacting a road surface while the tyre is running,
wherein the at least one rubber composition has an elastic modulus Et obtained from a tensile test defined in ASTM D882-09;
the tread (1) comprises at least one circumferential main groove (3) extending in the tyre circumferential direction, a plurality of auxiliary grooves (4) extending in the tyre rotation axis direction, and a plurality of blocks (5) defined by the circumferential main groove (3) and the auxiliary grooves (4);
each of the plurality of blocks (5) comprises an upper surface (51) forming the ground contact surface (2) of the tread (1), two front surface side walls (52, 53) extending in the tyre rotation axis direction and facing the auxiliary grooves (4), and two side surface side walls (54, 55) extending in the tyre circumferential direction and facing the circumferential main groove (3);
the upper surface (51) of the blocks (5) comprises front surface edges (521, 531) formed at a position intersecting the front surface side walls (52, 53) and extending in the tyre rotation axis direction, and side surface edges (541, 551) formed at a position intersecting the side surface side walls (54, 55) and extending in the tyre circumferential direction;
the blocks (5) comprise a reinforcing part (6) having a mean thickness t and provided on at least one of the front surface side walls (52, 53) from among the side walls (52, 53, 54, 55), and the reinforcing part (6) has a higher elastic modulus Ef than the elastic modulus Et of the rubber composition forming the tread (1) and the blocks (5); **characterised in that**
a waveform part (7) having at least two crest parts (72) and at least one trough part (71) is formed on the at least one front surface side wall (52, 53) on which the reinforcing part (6) is formed, and the waveform part (7) is provided in such a way as to form at least part of the front surface side walls (52, 53) and at least part of the reinforcing part (6) on the at least one front surface side wall (52, 53) on which the reinforcing part (6) is provided;
wherein
the waveform part (7) comprises at least two trough parts (71), and the innermost part of the waveform part (7) in the tyre radial direction is a trough part (71); and
the ratio (Dmaxi/Dmini) of distances on the blocks (5) in the tyre radial direction is between 1.0 and 1.3, where Dmini is a minimum distance which is either the smallest distance on the waveform part (7) between two crest parts (72) adjacent to each trough part (71) in the tyre radial direction or the smallest distance between the trough part (71) constituting the innermost part of the waveform part (7) in the tyre radial direction and a crest part (72) adjacent to said trough part (71) in the tyre radial direction, and Dmaxi is a maximum distance which is either the greatest distance on the waveform part (7) between two crest parts (72) adjacent to each trough part (71) in the tyre radial direction or the greatest distance between the trough part (71) constituting the innermost part of the waveform part (7) in the tyre radial direction and a crest part (72) adjacent to said trough part (71) in the tyre radial direction.

2. Tyre tread (1) formed by at least one rubber composition and having a ground contact surface (2) contacting a road surface while the tyre is running,
wherein the at least one rubber composition has an elastic modulus Et obtained from a tensile test defined in ASTM D882-09;
the tread (1) comprises at least one circumferential main groove (3) extending in the tyre circumferential direction, a plurality of auxiliary grooves (4) extending in the tyre rotation axis direction, and a plurality of blocks (5) defined by the circumferential main groove (3) and the auxiliary grooves (4);
each of the plurality of blocks (5) comprises an upper surface (51) forming the ground contact surface (2) of the tread (1), two front surface side walls (52, 53) extending in the tyre rotation axis direction and facing the auxiliary grooves (4), and two side surface side walls (54, 55) extending in the tyre circumferential direction and facing the circumferential main groove (3);
the upper surface (51) of the blocks (5) comprises front surface edges (521, 531) formed at a position intersecting the front surface side walls (52, 53) and extending in the tyre rotation axis direction, and side surface edges (541, 551) formed at a position intersecting the side surface side walls (54, 55) and extending in the tyre circumferential direction;
the blocks (5) comprise a reinforcing part (6) having a mean thickness t and provided on at least one of the front surface side walls (52, 53) from among the side walls (52, 53, 54, 55), and the reinforcing part (6) has a higher elastic modulus Ef than the elastic modulus Et of the rubber composition forming the tread (1) and the blocks (5); **characterised in that**
a waveform part (7) having at least two crest parts (72) and at least one trough part (71) is formed on the at least one front surface side wall (52, 53) on which the reinforcing part (6) is formed, and the waveform part (7) is provided in such a way as to form at least part of the front surface side walls (52, 53) and at least part of the reinforcing part (6) on the at least one front surface side wall (52, 53) on which the reinforcing part (6) is provided;
wherein
the blocks (5) further comprise a side wall edge (561) formed at the position of intersection of the at least one front surface side wall (52, 53) on which the reinforcing part (6) is provided and the side surface side walls (54, 55); and
the waveform part (7) is provided with an offset of at least 0.5 mm from the side wall edge (561) and the front surface edges (521, 531) of the at least one front surface side wall (52, 53).

3. tyre tread according to Claim 2, in which the waveform part (7) comprises at least three crest parts (72) and at least two trough parts (71), and the innermost part of the waveform part (7) in the tyre radial direction is a crest part (72); and
the ratio (Dmaxi/Dmini) of distances on the blocks (5) in the tyre radial direction is between 1.0 and 1.3, where Dmini is a minimum distance which is the smallest distance on the waveform part (7) between two crest parts (72) adjacent to each trough part (71) in the tyre radial direction, and Dmaxi is a maximum distance which is the greatest distance on the waveform part (7) between two crest parts (72) adjacent to each trough part (71) in the tyre radial direction.

4. Tyre tread according to any one of the Claims 1 to 3, in which the length Lr of the reinforcing part (6) of the blocks (5) in the tyre radial direction is between 80% and 100% of the height h of the blocks (5).

5. Tyre tread according to any one of the Claims 1 to 4, in which, on the at least one front surface side wall (52, 53) on which the reinforcing part (6) is provided, an angle A, seen from the tyre rotation axis direction between an imaginary line extending along the upper surface (51) of the blocks (5) and passing through the front surface edges (521, 531), and an imaginary line joining a crest part (72) on the radially outermost side of the waveform part (7) and a trough part (71) adjacent to said crest part (72), is between 60° and 90°.

6. Tyre tread according to any one of Claims 1 to 5, in which the radially outermost part of the waveform part (7) is a crest part (72) on the at least one front surface side wall (52, 53) on which the reinforcing part (6) is provided, and said crest part (72) and the front surface edges (521, 531) extend in parallel.

7. Tyre tread according to any one of Claims 1 to 6, in which the waveform part (7) on the at least one front surface side wall (52, 53) on which the reinforcing part (6) is provided has a predetermined width W and is formed over a predetermined distance D in the tyre radial direction, said predetermined distance D being between 60% and 100% of the height h of the blocks (5).

8. Tyre tread according to any one of Claims 1 to 7, in which an offset amount dd between the crest part (72) and the trough part (71) of the waveform part (7) in a direction extending along the upper surface (51) of the blocks (5) and passing through the front surface edges (521, 531) on the at least one front surface side wall (52, 53) on which the reinforcing part (6) is provided, is between 0.2 mm and 3 mm.

9. Tyre tread according to any one of Claims 1 to 8, in which there are three or fewer trough parts (71) on the waveform part (7).

10. Tyre tread according to any one of Claims 1 to 9, in which the blocks (5) comprise at least one narrow incision (8) which opens in at least the upper surface (51) thereof and extends in the tyre radial direction.

11. Tyre tread according to any one of Claims 1 to 10, in which the reinforcing part (6) and the waveform part (7) are provided on the two front surface side walls (52, 53) of the blocks (5), and in which the elastic modulus Ef of the material forming the reinforcing part (6) is at least 20 times greater than the elastic modulus Et of the rubber composition forming the tread (1) and the blocks (5), and in which the mean thickness t of the reinforcing part (6) is between 0.1 mm and 2.0 mm, preferably the reinforcing part (6) is provided over the whole region of the at least one front surface side wall (52, 53).

12. Tyre tread according to any one of Claims 1 to 11, in which the waveform part (7) includes at least part of the front surface edges (521, 531), preferably the waveform part (7) is provided over the whole region of the at least one front surface side wall (52, 53).

13. Tyre tread according to any one of Claims 1 to 12, in which at least one side surface side wall (54, 55) of the blocks (5) also comprises the reinforcing part (6) and the waveform part (7).

14. Tyre **characterized in that** it comprises the tread according to any one of Claims 1 to 13.

## Patentansprüche

1. Reifenlauffläche (1), die aus mindestens einer Gummizusammensetzung gebildet ist und eine Bodenkontaktfläche (2) aufweist, die bei laufendem Reifen mit einer Straßenoberfläche in Kontakt steht,
wobei die mindestens eine Gummizusammensetzung einen Elastizitätsmodul Et aufweist, der bei einem in ASTM D882-09 definierten Zugversuch erlangt wird;
die Lauffläche (1) mindestens eine umlaufende Hauptrille (3) umfasst, die sich in der Reifenumfangsrichtung erstreckt, mehrere Hilfsrillen (4), die sich in der Reifendrehachsenrichtung erstrecken, und mehrere durch die umlaufende Hauptrille (3) und die Hilfsrillen (4) definierte Blöcke (5);
jeder der mehreren Blöcke (5) eine obere Fläche (51) aufweist, die die Bodenkontaktfläche (2) der Lauffläche (1) bildet, zwei Vorderflächenseitenwände (52, 53), die sich in der Reifendrehachsenrichtung erstrecken und den Hilfsrillen (4) zugewandt sind, und zwei Seitenflächenseitenwände (54, 55), die sich in Reifenumfangsrichtung erstrecken und der umlaufenden Hauptrille (3) zugewandt sind;
die obere Fläche (51) der Blöcke (5) Vorderflächenkanten (521, 531) umfasst, die an einer Position ausgebildet sind, die die Vorderflächenseitenwände (52, 53) schneidet und sich in der Reifendrehachsenrichtung erstreckt, und Seitenflächenkanten (541, 551), die an einer Position ausgebildet sind, die die Seitenflächenseitenwände (54, 55) schneidet und sich in der Reifenumfangsrichtung erstreckt;
die Blöcke (5) einen Verstärkungsabschnitt (6) mit einer mittleren Dicke t umfassen, der an mindestens einer der Vorderflächenseitenwände (52, 53) unter den Seitenwänden (52, 53, 54, 55) vorgesehen ist, und der Verstärkungsabschnitt (6) einen höheren Elastizitätsmodul Ef hat als der Elastizitätsmodul Et der Gummizusammensetzung, die die Lauffläche (1) und die Blöcke (5) bildet; **dadurch gekennzeichnet, dass**
ein Wellenformabschnitt (7) mit mindestens zwei Scheitelabschnitten (72) und mindestens einem Muldenabschnitt (71) ausgebildet ist an der mindestens einen Vorderflächenseitenwand (52, 53), an der der Verstärkungsabschnitt (6) ausgebildet ist, und der Wellenformabschnitt (7) derart bereitgestellt ist, dass er mindestens einen Abschnitt der Vorderflächenseitenwände (52, 53) und mindestens einen Abschnitt des Verstärkungsabschnitts (6) auf der mindestens einen Vorderflächenseitenwand (52, 53) bildet, auf der der Verstärkungsabschnitt (6) vorgesehen ist;
wobei der Wellenformabschnitt (7) mindestens zwei Muldenabschnitte (71) aufweist, und der innerste Abschnitt des Wellenformabschnitts (7) in der Reifenradialrichtung ein Muldenabschnitt (71) ist; und
das Verhältnis (Dmaxi/Dmini) der Abstände auf den Blöcken (5) in der Reifenradialrichtung zwischen 1,0 und 1,3 liegt, wobei Dmini ein Minimalabstand ist, der entweder der kleinste Abstand auf dem Wellenformabschnitt (7) zwischen zwei zu jedem Muldenabschnitt (71) in der Reifenradialrichtung benachbarten Scheitelabschnitten (72) ist oder der kleinste Abstand zwischen dem den innersten Teil des Wellenformabschnitts (7) in der Reifenradialrichtung bildenden Muldenabschnitt (71) und einem zum Muldenabschnitt (71) in der Reifenradialrichtung benachbarten Scheitelabschnitt (72) ist, und Dmaxi ein Maximalabstand ist, der entweder der größte Abstand auf dem Wellenformabschnitt (7) zwischen zwei in der Reifenradialrichtung zu jedem Muldenabschnitt (71) benachbarten Scheitelabschnitten (72) ist oder der größte Abstand zwischen dem Muldenabschnitt (71), der den innersten Teil des Wellenformabschnitts (7) in der Reifenradialrichtung bildet, und einem in der Reifenradialrichtung zum Muldenabschnitt (71) benachbarten Scheitelabschnitt (72) ist.

2. Reifenlauffläche (1), die aus mindestens einer Gummizusammensetzung gebildet ist und eine Bodenkontaktfläche (2) aufweist, die bei laufendem Reifen mit einer Straßenoberfläche in Kontakt steht,
wobei die mindestens eine Gummizusammensetzung einen Elastizitätsmodul Et aufweist, der bei einem in ASTM D882-09 definierten Zugversuch erlangt wird;
die Lauffläche (1) mindestens eine umlaufende Hauptrille (3) umfasst, die sich in der Reifenumfangsrichtung erstreckt, mehrere Hilfsrillen (4), die sich in der Reifendrehachsenrichtung erstrecken, und mehrere durch die umlaufende Hauptrille (3) und die Hilfsrillen (4) definierte Blöcke (5);
jeder der mehreren Blöcke (5) eine obere Fläche (51) aufweist, die die Bodenkontaktfläche (2) der Lauffläche (1) bildet, zwei Vorderflächenseitenwände (52, 53), die sich in der Reifendrehachsenrichtung erstrecken und den Hilfsrillen (4) zugewandt sind, und zwei Seitenflächenseitenwände (54, 55), die sich in der Reifenumfangsrichtung erstrecken und der umlaufenden Hauptrille (3) zugewandt sind;
die obere Fläche (51) der Blöcke (5) Vorderflächenkanten (521, 531) umfasst, die an einer Position ausgebildet sind, die die vorderen Vorderflächenseitenwände (52, 53) schneidet und sich in der Reifendrehachsenrichtung erstreckt, und Seitenflächenkanten (541, 551), die an einer Position ausgebildet sind, die die Seitenflächenseitenwände (54, 55) schneidet und sich in Reifenumfangsrichtung erstreckt;
die Blöcke (5) einen Verstärkungsabschnitt (6) mit einer mittleren Dicke t umfassen, der an mindestens einer der Vorderflächenseitenwände (52, 53) unter den Seitenwänden (52, 53, 54, 55) vorgesehen ist, und der Verstärkungsabschnitt (6) einen höheren Elastizitätsmodul Ef hat als der Elastizitätsmodul Et der Gummizusammensetzung, die die Lauffläche (1) und die Blöcke (5) bildet; **dadurch gekennzeichnet, dass**
ein Wellenformabschnitt (7) mit mindestens zwei Scheitelabschnitten (72) und mindestens einem Muldenabschnitt (71) ausgebildet ist an der mindestens einen Vorderflächenseitenwand (52, 53), an der der Verstärkungsabschnitt (6) ausgebildet ist, und der Wellenformabschnitt (7) derart bereitgestellt ist, dass er mindestens einen Abschnitt der Vorderflächenseitenwände (52, 53) und mindestens einen Abschnitt des Verstärkungsabschnitts (6) auf der mindestens einen Vorderflächenseitenwand (52, 53) bildet, auf der das Verstärkungsabschnitt (6) vorgesehen ist;
wobei die Blöcke (5) ferner eine Seitenwandkante (561) umfassen, die an der Position der Überschneidung der mindestens einen Vorderflächenseitenwand (52, 53), auf der der Verstärkungsabschnitt (6) vorgesehen ist, ausgebildet ist, mit den Seitenflächen-Seitenwände (54, 55) vorgesehen ist; und
der Wellenformabschnitt (7) mit einem Versatz von mindestens 0,5 mm von der Seitenwandkante (561) und den Vorderflächenkanten (521, 531) der mindestens einen Vorderflächenseitenwand (52, 53) vorgesehen ist.

3. Reifenlauffläche nach Anspruch 2, wobei der Wellenformabschnitt (7) mindestens drei Scheitelabschnitte (72) und mindestens zwei Muldenabschnitte (71) umfasst, und der innerste Teil des Wellenformabschnitts (7) in der Reifenradialrichtung ein Scheitelabschnitt (72) ist; und
das Verhältnis (Dmaxi/Dmini) der Abstände auf den Blöcken (5) in der Reifenradialrichtung zwischen 1,0 und 1,3 liegt, wobei Dmini ein Minimalabstand ist, der der kleinste Abstand auf dem Wellenformabschnitt (7) zwischen zwei zu jedem Muldenabschnitt (71) in der Reifenradialrichtung benachbarten Scheitelabschnitten (72) ist, und Dmaxi ein Maximalabstand ist, der der größte Abstand auf dem Wellenformabschnitt (7) zwischen zwei in der Reifenradialrichtung zu jedem Muldenabschnitt (71) benachbarten Scheitelabschnitten (72) ist.

4. Reifenlauffläche nach einem der Ansprüche 1 bis 3, wobei die Länge Lr des Verstärkungsabschnitts (6) der Blöcke (5) in der Reifenradialrichtung zwischen 80% und 100% der Höhe h der Blöcke (5) beträgt.

5. Reifenlauffläche nach einem der Ansprüche 1 bis 4, wobei an der mindestens einen Vorderflächenseitenwand (52, 53), an der der Verstärkungsabschnitt (6) vorgesehen ist, ein Winkel A, gesehen von der Reifendrehachsenrichtung aus, zwischen einer gedachten Linie, die sich entlang der oberen Fläche (51) der Blöcke (5) erstreckt und durch die Vorderflächenkanten (521, 531) verläuft, und einer gedachten Linie, die einen Scheitelabschnitt (72) auf der radial äußersten Seite des Wellenformabschnitts (7) mit einem am Scheitelabschnitt (72) benachbarten Muldenabschnitt (71) verbindet, zwischen 60° und 90° beträgt.

6. Reifenlauffläche nach einem der Ansprüche 1 bis 5, wobei der radial äußerste Teil des Wellenformabschnitts (7) ein Scheitelabschnitt (72) an der mindestens einen Vorderflächenseitenwand (52, 53) ist, an der der Verstärkungsabschnitt (6) vorgesehen ist, und der Scheitelabschnitt (72) und die Vorderflächenkanten (521, 531) sich parallel erstrecken.

7. Reifenlauffläche nach einem der Ansprüche 1 bis 6, wobei der Wellenformabschnitt (7) an der mindestens einen Vorderflächenseitenwand (52, 53), an der der Verstärkungsabschnitt (6) vorgesehen ist, eine im Voraus bestimmte Breite W aufweist und über einen im Voraus bestimmten Abstand D in der Reifenradialrichtung ausgebildet ist, wobei der im Voraus bestimmte Abstand D zwischen 60% und 100% der Höhe h der Blöcke (5) beträgt.

8. Reifenlauffläche nach einem der Ansprüche 1 bis 7, wobei ein Versatz dd zwischen dem Scheitelabschnitt (72) und dem Muldenabschnitt (71) des Wellenformabschnitts (7) in einer Richtung, die entlang der oberen Fläche (51) der Blöcke (5) und durch die Vorderflächenkanten (521, 531) an der mindestens einen Vorderflächenseitenwand (52, 53), an denen der Verstärkungsteil (6) vorgesehen ist, verläuft, zwischen 0,2 mm und 3 mm beträgt.

9. Reifenlauffläche nach einem der Ansprüche 1 bis 8, wobei am Wellenformabschnitt (7) drei oder weniger Muldenabschnitte (71) vorhanden sind.

10. Reifenlauffläche nach einem der Ansprüche 1 bis 9, wobei die Blöcke (5) mindestens einen schmalen Einschnitt (8) aufweisen, der sich mindestens in der oberen Fläche (51) davon öffnet und sich in der Reifenradialrichtung erstreckt.

11. Reifenlauffläche nach einem der Ansprüche 1 bis 10, wobei der Verstärkungsabschnitt (6) und der Wellenformabschnitt (7) an den beiden Vorderflächenseitenwänden (52, 53) der Blöcke (5) vorgesehen sind, und wobei der Elastizitätsmodul Ef des den Verstärkungsabschnitt (6) bildenden Materials mindestens 20mal größer ist als der Elastizitätsmodul Et der Gummizusammensetzung, die die Lauffläche (1) und die Blöcke (5) bildet, und wobei die mittlere Dicke t des Verstärkungsabschnitts (6) zwischen 0,1 mm und 2,0 mm beträgt, wobei der Verstärkungsabschnitt (6) bevorzugt über den gesamten Bereich der mindestens einen Vorderflächenseitenwand (52, 53) bereitgestellt ist.

12. Reifenlauffläche nach einem der Ansprüche 1 bis 11, wobei der Wellenformabschnitt (7) mindestens einen Abschnitt der Vorderflächenkanten (521, 531) umfasst, der Wellenformabschnitt (7) bevorzugt über den gesamten Bereich der mindestens einen Vorderflächenseitenwand (52, 53) bereitgestellt ist.

13. Reifenlauffläche nach einem der Ansprüche 1 bis 12, wobei mindestens eine Seitenflächenseitenwand (54, 55) der Blöcke (5) auch den Verstärkungsabschnitt (6) und den Wellenformabschnitt (7) umfasst.

14. Reifen, **dadurch gekennzeichnet, dass** er die Lauffläche nach einem der Ansprüche 1 bis 13 umfasst.

## Revendications

1. Bande de roulement de pneu (1) formée par au moins une composition de caoutchouc et ayant une surface de contact (2) avec un sol en contact avec une surface de route lorsque le pneu roule,
dans laquelle la au moins une composition de caoutchouc a un module élastique Et obtenu par un essai de traction défini dans ASTM D882-09 ;
la bande de roulement (1) comprend au moins une rainure principale circonférentielle (3) s'étendant dans la direction circonférentielle du pneu, une pluralité de rainures auxiliaires (4) s'étendant dans la direction de l'axe de rotation du pneu, et une pluralité de blocs (5) définis par la rainure principale circonférentielle (3) et les rainures auxiliaires (4) ;
chacun de la pluralité de blocs (5) comprend une surface supérieure (51) formant la surface de contact avec le sol (2) de la bande de roulement (1), deux parois latérales de surface avant (52, 53) s'étendant dans la direction de l'axe de rotation du pneu et faisant face aux rainures auxiliaires (4), et deux parois latérales de surface latérale (54, 55) s'étendant dans la direction circonférentielle du pneu et faisant face à la rainure principale circonférentielle (3) ;
la surface supérieure (51) des blocs (5) comprend des bords de surface avant (521, 531) formés dans une position intersectant les parois latérales de surface avant (52, 53) et s'étendant dans la direction de l'axe de rotation du pneu, et des bords de surface latérale (541, 551) formés dans une position intersectant les parois latérales de surface latérale (54, 55) et s'étendant dans la direction circonférentielle du pneu ;
les blocs (5) comprennent une partie de renforcement (6) ayant une épaisseur moyenne t et prévue sur au moins l'une des parois latérales de surface avant (52, 53) parmi les parois latérales (52, 53, 54, 55), et la partie de renforcement (6) a un module élastique Ef plus grand que le module élastique Et de la composition de caoutchouc formant la bande de roulement (1) et les blocs (5), **caractérisée en ce que** :
une partie en forme d'onde (7) ayant au moins deux parties de crête (72) et au moins une partie de creux (71) est formée sur la au moins une paroi latérale de surface avant (52, 53) sur laquelle la partie de renforcement (6) est formée, et la partie en forme d'onde (7) est prévue de sorte à former au moins une partie des parois latérales de surface avant (52, 53) et au moins une partie de la partie de renforcement (6) sur la au moins une paroi latérale de surface avant (52, 53) sur laquelle la partie de renforcement (6) est prévue ;
dans laquelle la partie en forme d'onde (7) comprend au moins deux parties de creux (71) et la partie la plus intérieure de la partie en forme d'onde (7) dans la direction radiale du pneu est une partie de creux (71) ; et
le rapport (Dmaxi/Dmini) de distances sur les blocs (5) dans la direction radiale du pneu est compris entre 1,0 et 1,3, où Dmini est une distance minimum qui est soit la plus petite distance sur la partie en forme d'onde (7) entre deux parties de crêtes (72) adjacentes à chaque partie de creux (71) dans la direction radiale du pneu, soit la plus petite distance entre la partie de creux (71) constituant la partie la plus intérieure de la partie en forme d'onde (7) dans la direction radiale du pneu et une partie de crête (72) adjacente à ladite partie de creux (71) dans la direction radiale du pneu et Dmaxi est une distance maximum qui est soit la plus grande distance sur la partie en forme d'onde (7) entre deux parties de crêtes (72) adjacentes à chaque partie de creux (71) dans la direction radiale du pneu, soit la plus grande distance entre la partie de creux (71) constituant la partie la plus intérieure de la partie en forme d'onde (7) dans la direction radiale du pneu et une partie de crête (72) adjacente à ladite partie de creux (71) dans la direction radiale du pneu.

2. Bande de roulement de pneu (1) formée par au moins une composition de caoutchouc et ayant une surface de contact avec un sol (2) en contact avec une surface de route lorsque le pneu roule,
dans laquelle la au moins une composition en caoutchouc a un module élastique Et obtenu à partir d'un essai de traction défini dans ASTM D882-09 ;
la bande de roulement (1) comprend au moins une rainure principale circonférentielle (3) s'étendant dans la direction circonférentielle du pneu, une pluralité de rainures auxiliaires (4) s'étendant dans la direction de l'axe de rotation du pneu, et une pluralité de blocs (5) définis par la rainure principale circonférentielle (3) et les rainures auxiliaires (4) ;
chacun de la pluralité de blocs (5) comprend une surface supérieure (51) formant la surface de contact avec le sol (2) de la bande de roulement (1), deux parois latérales de surface avant (52, 53) s'étendant dans la direction de l'axe de rotation du pneu, et faisant face aux rainures auxiliaires (4), et deux parois latérales de surface latérale (54, 55) s'étendant dans la direction circonférentielle du pneu et faisant face à la rainure principale circonférentielle (3) ;
la surface supérieure (51) des blocs (5) comprend des bords de surface avant (521, 531) formés dans une position intersectant les parois latérales de surface avant (52, 53) et s'étendant dans la direction de l'axe de rotation du pneu, et des bords de surface latérale (541, 551) formés dans une position intersectant les parois latérales de surface latérale (54, 55) et s'étendant dans la direction circonférentielle du pneu ;
les blocs (5) comprennent une partie de renforcement (6) ayant une épaisseur moyenne t et prévue sur au moins l'une des parois latérales de surface avant (52, 53) parmi les parois latérales (52, 53, 54, 55), et la partie de renforcement (6) a un module élastique Ef plus grand que le module élastique Et de la composition de caoutchouc formant la bande de roulement (1) et les blocs (5) ; **caractérisée en ce que** :
une partie en forme d'onde (7) ayant au moins deux parties de crête (72) et au moins une partie de creux (71) est formée sur la au moins une paroi latérale de surface avant (52, 53) sur laquelle la partie de renforcement (6) est formée, et la partie en forme d'onde (7) est prévue de sorte à former au moins une partie des parois latérales de surface avant (52, 53) et au moins une partie de la partie de renforcement (6) sur la au moins une paroi latérale de surface avant (52, 53) sur laquelle la partie de renforcement (6) est prévue ;
dans laquelle les blocs (5) comprennent en outre un bord de paroi latérale (561) formé dans la position d'intersection de la au moins une paroi latérale de surface avant (52, 53), sur laquelle la partie de renforcement (6) est prévue, et les parois latérales de surface latérale (54, 55) ; et
la partie en forme d'onde (7) est prévue avec un décalage d'au moins 0,5 mm par rapport au bord de paroi latérale (561) et aux bords de surface avant (521, 531) de la au moins une paroi latérale de surface avant (52, 53) .

3. Bande de roulement selon la revendication 2, dans laquelle la partie en forme d'onde (7) comprend au moins trois parties de crête (72) et au moins deux parties de creux (71), et la partie la plus intérieure de la partie en forme d'onde (7) dans la direction radiale du pneu est une partie de crête (72) ; et
le rapport (Dmaxi/Dmini) de distances sur les blocs (5) dans la direction radiale du pneu est compris entre 1,0 et 1,3, où Dmini est la distance minimum qui est la plus petite distance sur la partie en forme d'onde (7) entre deux parties de crête (72) adjacentes à chaque partie de creux (71) dans la direction radiale du pneu, et Dmaxi est une distance maximum qui est la plus grande distance sur la partie en forme d'onde (7) entre deux parties de crête (72) adjacentes à chaque partie de creux (71) dans la direction radiale du pneu.

4. Bande de roulement selon l'une quelconque des revendications 1 à 3, dans laquelle la longueur Lr de la partie de renforcement (6) des blocs (5) dans la direction radiale du pneu est comprise entre 80 % et 100 % de la hauteur h des blocs (5).

5. Bande de roulement selon l'une quelconque des revendications 1 à 4, dans laquelle, sur la au moins une paroi latérale de surface avant (52, 53) sur laquelle la partie de renforcement (6) est prévue, un angle A, observé depuis la direction de l'axe de rotation du pneu entre une ligne imaginaire s'étendant le long de la surface supérieure (51) des blocs (5) et passant par les bords de surface avant (521, 531), et une ligne imaginaire joignant une partie de crête (72) sur le côté radialement le plus externe de la partie en forme d'onde (7) et une partie de creux (71) adjacente à ladite partie de crête (72), est compris entre 60° et 90°.

6. Bande de roulement selon l'une quelconque des revendications 1 à 5, dans laquelle la partie radialement la plus externe de la partie en forme d'onde (7) est une partie de crête (72) sur la au moins une paroi latérale de surface avant (52, 53) sur laquelle la partie de renforcement (6) est prévue, et ladite partie de crête (72) et les bords de surface avant (521, 531) s'étendent parallèlement.

7. Bande de roulement selon l'une quelconque des revendications 1 à 6, dans laquelle la partie en forme d'onde (7) sur la au moins une paroi latérale de surface avant (52, 53) sur laquelle la partie de renforcement (6) est prévue a une largeur W prédéterminée et est formée sur une distance D prédéterminée dans la direction radiale du pneu, ladite distance D prédéterminée étant comprise entre 60 % et 100 % de la hauteur h des blocs (5).

8. Bande de roulement selon l'une quelconque des revendications 1 à 7, dans laquelle une longueur de décalage dd entre la partie de crête (72) et la partie de creux (71) de la partie en forme d'onde (7) dans une direction s'étendant le long de la surface supérieure (51) des blocs (5) et passant par les bords de surface avant (521, 531) sur la au moins une paroi latérale de surface avant (52, 53) sur laquelle la partie de renforcement (6) est prévue, est comprise entre 0,2 mm et 3 mm.

9. Bande de roulement selon l'une quelconque des revendications 1 à 8, dans laquelle il y a trois ou moins parties de creux (71) sur la partie en forme d'onde (7).

10. Bande de roulement selon l'une quelconque des revendications 1 à 9, dans laquelle les blocs (5) comprennent au moins une incision étroite (8) qui s'ouvre dans au moins sa surface supérieure (51) et s'étend dans la direction radiale du pneu.

11. Bande de roulement selon l'une quelconque des revendications 1 à 10, dans laquelle la partie de renforcement (6) et la partie en forme d'onde (7) sont prévues sur les deux parois latérales de surface avant (52, 53) des blocs (5), et dans laquelle le module élastique Ef du matériau formant la partie de renforcement (6) est au moins 20 fois supérieur au module élastique Et de la composition de caoutchouc formant la bande de roulement (1) et les blocs (5), et dans laquelle l'épaisseur moyenne t de la partie de renforcement (6) est comprise entre 0,1 mm et 2,0 mm, de préférence la partie de renforcement (6) est prévue sur toute la région de la au moins une paroi latérale de surface avant (52, 53).

12. Bande de roulement selon l'une quelconque des revendications 1 à 11, dans laquelle la partie en forme d'onde (7) comprend au moins une partie des bords de surface avant (521, 531), de préférence la partie en forme d'onde (7) est prévue sur toute la région de la au moins une paroi latérale de surface avant (52, 53).

13. Bande de roulement selon l'une quelconque des revendications 1 à 12, dans laquelle au moins une paroi latérale de surface latérale (54, 55) des blocs (5) comprend également la partie de renforcement (6) et la partie en forme d'onde (7).

14. Pneu **caractérisé en ce qu'**il comprend la bande de roulement selon l'une quelconque des revendications 1 à 13.
